# EUROPÄISCHE PATENTSCHRIFT

(11) **EP 1 046 337 B1**
(45) Veröffentlichungstag und Bekanntmachung des Hinweises auf die Patenterteilung: **16.03.2005**
(21) Anmeldenummer: 00107901.1
(22) Anmeldetag: 12.04.2000
(51) Int. Cl.: A01N 25/22, A01N 47/04, A01N 41/12, A01N 37/32, C09D 133/08, C09D 133/10, C09D 133/12, C09D 167/08, C09D 5/14, B27K 3/40, B27K 3/34

(54) **Wasserbasierte Formulierungen mit fungizider Wirkung**
Waterbased formulations having fungicidal activity
Formulations aqueuses fongicides

(30) Priorität: 24.04.1999 DE 19918730
(43) Veröffentlichungstag der Anmeldung: 25.10.2000
(73) Patentinhaber: Bayer Chemicals AG, 51368 Leverkusen (DE)
(72) Erfinder: Buschhaus, Hans-Ulrich, Dr., 47800 Krefeld (DE); Spetmann, Peter, 47829 Krefeld (DE); Jaetsch, Thomas, Dr., 50668 Köln (DE); Kugler, Martin, Dr., 42799 Leichlingen (DE)

(56) Entgegenhaltungen:
- EP-A- 0 562 164
- WO-A-96/39836
- DD-A- 153 888
- DE-A- 3 004 319
- DE-A- 3 414 244

## Beschreibung

Die vorliegende Anmeldung betrifft lagerstabile wäßrige Formulierungen, die neben hydrolyseempfindlichen Wirkstoffen spezielle Bindemittel zur Stabilisierung der Wirkstoffe enthalten.

Viele Breitbandfungizide eignen sich aufgrund ihrer Hydrolyseempfindlichkeit nur bedingt für den Einsatz in wasserbasierten Systemen.

Der Wirkmechanismus von z.B. Trihalogenmethylthio-Verbindungen wie Dichlofluanid, Tolylfluanid, Fluorfolpet und Folpet basiert auf der Fähigkeit der N-S-Bindung sich zu öffnen, um dann mit nukleophilen Gruppen (z.B. SH-Gruppen) zu reagieren.

Die meisten dieser Verbindungen zeigen in wäßrigen Systemen bei alkalischen pH-Werten (ca. pH 9) eine Halbwertzeit von wenigen Minuten, im neutralen Bereich (ca. pH 7) von wenigen Stunden und im sauren Bereich (ca. pH 4) von wenigen Tagen.

Der Einsatz in wasserbasierten, sogenannten ready-to-use Holzschutzlasuren und -grundierungen, Dispersionsfarben und Antifoulingfarben ist daher aufgrund der kurzen Lagerstabilität, welche auf die Instabilität der Fungizide zurückzuführen ist, nicht möglich.

Aus OE-A 30 04 319 sind Holzschutzmittelkonzentrate bekannt die wasserverdünnbar sind und ein organisch-chemisches, wasserunlösliches Insektizid und/oder Fungizid sowie ein wasserverdünnbares Kunstharz, bevorzugt Alkydharz, enthalten.

DD-A 153 888 offenbart einen Anstrichstoff auf Basis wässriger Polyacrylatdispersionen welcher als fungiziden Wirkstoff Dichlofluanid enthält.

DE-A 3414244 betrifft Holzschutzanstrichmittel bestehend aus ua. Bioziden, organisch-chemischen Lösungsmitteln und mittel- und/oder langöligen, trocknenden Alkydharzen.

EP-A 562 164 offenbart wasserverdünnbare Konzentrate zum Konservieren von Holz, bestehend aus einem Fungizid und einem Insektizid, einem wasserlöslichen Alkydharz sowie gegebenenfalls einem organisch-chemischen Lösungsmittel.

Gemäß WO-A 96/39836 wird eine biozide Zusammensetzung offenbart, die eine Halopropargylverbindung und einen Puffer in bestimmten Gewichtsverhältnissen enthält.

Überraschend und völlig unerwartet wurde nun gefunden, daß hydrolyseempfindliche Wirkstoffe durch den Gebrauch bestimmter Bindemittelsysteme stabilisiert werden können.

Gegenstand der Anmeldung sind daher lagerstabile, wäßrige Formulierungen enthaltend
a) mindestens einen hydrolyseempfindlichen Wirkstoff aus der Reihe Dichlofluanid, Tolylfluanid, Fluorfolpet und
b) mindestens ein Bindemittel mit einem pH-Wert ≤ 7 aus der Reihe der Alkydharze und Acrylatdispersionen.

Die hydrolyseempfindlichen Wirkstoffe besitzen in sauren, neutralen und insbesondere alkalischen Systemen eine Halbwertzeit von wenigen Minuten bis zu einem halbem Jahr.

Bindemittel im Sinne der Erfindung sind Alkydharze und Acrylatdispersionen, die gegebenenfalls auch in copolymerer Form vorliegen können, die sich dadurch auszeichnen, daß sie in wäßrigen Lösungen oder Emulsionen einen pH-Wert ≤7, insbesondere ≤5, bevorzugt ≤3 aufweisen.

Beispielhaft und vorzugsweise seien als Bindemittel genannt:
Alkyd/Maleinsäureanhydrid-Copolymerisate, Alkyd/modifiziertes Leinöl, Alkydharze, Alkydharz/Sojaöl/Leinöl in Kombination mit Acrylat-Dispersion.

Sowohl die Wirkstoffe als auch die Bindemittel sind bekannt und im Handel erhältlich.

Die erfindungsgemäßen wäßrigen Formulierungen bzw. Systeme enthalten vorzugsweise 0,001 bis 90, insbesondere 0,01 bis 50, bevorzugt 0,1 bis 5, besonders bevorzugt 0,1 bis 2 Gewichtsprozent Wirkstoff und vorzugsweise 3 bis 80, insbesondere 5 bis 50 und bevorzugt 5 bis 30 Gewichtsprozent Bindemittel.

Als wäßrige Formulierungen und Systeme sind beispielhaft und vorzugsweise wasserbasierte Farben wie insbesondere Dispersionsfarben und Antifoulingfarben sowie bevorzugt Holzschutzmittel wie insbesondere Holzschutzlasuren und -Grundierungen zu verstehen.

Wäßrige Systeme enthalten gegebenenfalls allgemein für insbesondere Holzschutzlasuren, Dispersionsfarben und Antifoulingfarben übliche Bestandteile wie Pigmente, Farbstoffe, Hilfs- und Bindemittel, Emulgatoren, Dispergatoren sowie weitere Wirkstoffe wie nicht hydrolyseempfindliche Fungizide, Insektizide und/oder Bakterizide

Die erfindungsgemäßen wäßrigen Formulierungen und Systeme haben gegenüber den bekannten Systemen den Vorteil, daß die Wirkstoffe sowohl im sauren und neutralen Medium gegen Hydrolyse und Zersetzung für lange Zeit stabil sind.

Die Erfindung wird durch die nachfolgenden Beispiele näher erläutert. Die Erfindung ist nicht auf die Beispiele beschränkt. Prozentangaben bedeuten im folgenden Gewichtsprozente.

### Beispiel

Tolylfluanid (TF) wird in verschiedene wasserbasierte Holzschutzmittel unter Rühren eingearbeitet. Die Proben werden bei Raumtemperatur auf ihre Lagerstabilität geprüft. Der Wirkstoffgehalt in den Proben wird mittels HPLC gemessen.

Die nachfolgende Tabelle gibt die Ergebnisse an:

**Tabelle 1**

| Bsp. -Nr. | Bindemittel | | pH BM | % TF | | % TF, Lagerung bei RT | | | | |
|---|---|---|---|---|---|---|---|---|---|---|
| | % | Beschreibung | | theor. | n. Herst. | 1 Mon. | 3 Mon. | 2 Mon. | 9 Mon. | 12 Mon. |
| 1 | 16,5 | Alkyd/Soja/Leinöl+ Acrylat-Dispersion | 2 | 0,74 | 0,72 | 0,80 | 0,69 | 0,69 | 0,67 | 0,69 |
| 2 | 16,5 | Alkyd | 3,5-5 | 0,74 | 0,74 | 0,97 | 0,64 | 0,75 | 0,63 | 0,62 |

## Patentansprüche

1. Lagerstabile wäßrige Formulierung enthaltend
a) mindestens einen hydrolyseempfindlichen Wirkstoff aus der Reihe Dichlofluanid, Tolylfluanid, Fluorfolpet und
b) mindestens ein Bindemittel mit einem pH-Wert ≤ 7 aus der Reihe der Alkydharze und Acrylatdispersionen.

2. Wäßrige Systeme gemäß Anspruch 1, in denen die Bindemittel einen pH-Wert ≤5 aufweisen.

3. Wäßrige Systeme gemäß Anspruch 1, in denen die Bindemittel einen pH-Wert ≤3 aufweisen.

4. Verwendung von Bindemitteln, die aus Alkydharz und/oder Acrylatdispersionen bestehen und die in Wasser einen pH-Wert ≤7 aufweisen, zur Stabilisierung von hydrolyseempfindlichen Wirkstoffen aus der Reihe Dichlofluanid, Tolylfluanid und Fluorfolpet in wäßrigen Systemen.

5. Verwendung von Bindemitteln, die aus Alkydharz und/oder Acrylatdispersionen bestehen und die in Wasser einen pH-Wert ≤7 aufweisen, in Kombination mit hydrolyseempfindlichen Wirkstoffen aus der Reihe Dichlofluanid, Tolylfluanid und Fluorfolpet zum Schutz von wäßrigen Systemen vor mikrobiellem Befall.

6. Verwendung gemäß einem der Ansprüche 4 und 5, **dadurch gekennzeichnet, daß** die wäßrigen Systeme einen pH-Wert ≤5 aufweisen.

7. Verfahren zur Stabilisierung von hydrolyseempfindlichen Wirkstoffen aus der Reihe Dichlofluanid, Tolylfluanid und Fluorfolpet in wäßrigen Systemen, **dadurch gekennzeichnet, daß** man die wäßrigen Systeme mit Bindemitteln, bestehend aus Alkydharz und/oder Acrylatdispersionen und die in Wasser einen pH-Wert ≤7 aufweisen, versetzt.

## Claims

1. Storage-stable aqueous formulation comprising
a) at least one hydrolysis-sensitive active compound from the group consisting of dichlofluanid, tolylfluanid, fluorfolpet and
b) at least one binder with a Ph ≤ 7 from the group consisting of alkyd resins and acrylate dispersions.

2. Aqueous systems according to Claim 1, in which the binders have a pH ≤5.

3. Aqueous systems according to Claim 1, in which the binders have a pH <3.

4. Use of binders which consist of alkyd resin and/or acrylate dispersions and have a pH ≤7 in water for stabilizing hydrolysis-sensitive active compounds from the group consisting of dichlofluanid, tolylfluanid and fluorfolpet in aqueous systems.

5. Use of binders which consist of alkyd resin and/or acrylate dispersions and have a pH ≤7 in water in combination with hydrolysis-sensitive active compounds from the group consisting of dichlofluanid, tolylfluanid and fluorfolpet for protecting aqueous systems against microbial infestation.

6. Use according to one of Claims 4 and 5, **characterized in that** the aqueous systems have a pH ≤5.

7. Method of stabilizing hydrolysis-sensitive active compounds from the group consisting of dichlofluanid, tolylfluanid and fluorfolpet in aqueous systems, **characterized in that** the aqueous systems are admixed with binders consisting of alkyd resin and/or acrylate dispersions and having a pH ≤7 in water.

## Revendications

1. Formulation aqueuse stable au stockage comprenant
a) au moins un principe actif sensible à l'hydrolyse de la série dichlofluanide, tolylfluanide, fluorfolpet et
b) au moins un liant avec un pH ≤ 7.de la série des résines alkydes et dispersions d'acrytate.

2. Systèmes aqueux selon la revendication 1, dans lesquels les liants présentent un pH ≤ 5.

3. Systèmes aqueux selon la revendication 1, dans lesquels les liants présentent un pH ≤ 3.

4. Mise en oeuvre de liants qui se composent de résine alkyde et/ou de dispersions d'acrylate et qui présentent dans l'eau un pH ≤ 7 en vue de la stabilisation de principes actifs sensibles à l'hydrolyse de la série dichlofluanide, tolylfluanide et fluorfolpet dans des systèmes aqueux.

5. Mise en oeuvre de liants qui se composent de résine alkyde et/ou de dispersions d'acrylate et qui présentent dans l'eau un pH ≤ 7 en combinaison avec des principes actifs sensibles à l'hydrolyse de la série dichlofluanide, tolylfluanide et fluorfolpet en vue de la protection de systèmes aqueux contre une contamination microbienne.

6. Mise en oeuvre selon l'une des revendications 4 et 5, **caractérisée en ce que** les systèmes aqueux présentent un pH ≤ 5.

7. Procédé de stabilisation de principes actifs sensibles à l'hydrolyse de la série dichlofluanide, tolylfluanide et fluorfolpet dans des systèmes aqueux, **caractérisé en ce que** l'on mélange les systèmes aqueux avec des liants composés de résine alkyde et/ou de dispersions d'acrylate et qui présentent un pH ≤ 7 dans l'eau.
